# EUROPEAN PATENT APPLICATION

(11) **EP 3 686 766 A2**
(43) Date of publication of application: **29.07.2020**
(21) Application number: 20152848.6
(22) Date of filing: 21.01.2020
(51) Int. Cl.: G06F 30/20, G06F 113/12

(54) **A KNIT SIMULATION METHOD AND A KNIT SIMULATION SYSTEM**

(30) Priority: 23.01.2019 JP 2019009022
(71) Applicant: SHIMA SEIKI MFG., LTD., Wakayama 641-0003 (JP)
(72) Inventor: TERAI, Koichi, Wakayama, 6410003 (JP); NAKAMURA, Toshinori, Wakayama, 6410003 (JP); YAMAMOTO, Shinji, Wakayama, 6410003 (JP); SUZUKI, Noriyuki, Wakayama, 6410003 (JP)
(74) Representative: Carstens, Dirk Wilhelm

(57) **Abstract**

The virtual shape of knit product comprising plural parts mutually divided in the knit data is simulated. The connection information regarding how said parts are mutually connected is obtained based upon the knit data or the pattern data of the knit product, and the plural parts are mutually based upon the obtained connection information. The virtual shape of the knit product is deformed by deforming the plural parts according to the forces acting on the plural parts. At least one of the plural parts is stretched automatically or according to at least an instruction by a user, and then, the virtual shape of the knit product is re-deformed to a natural shape by re-deforming the plural parts according to the forces acting on the plural parts. Then, stitches are allocated within the plural parts, and the allocation of the stitches is smoothed within the plural parts.

## Description

### Filed of the Invention

The present invention relates to simulation of the shapes of knit products comprising plural parts.

### Background Art

In knit simulation, the virtual shapes of completed knit products are simulated according to their knit data. For this purpose, forces acting on loops (stitches) are considered to obtain stable shapes of the knit products.

When the knit products have a relatively larger number of stitches, the computational time necessary to the virtual shapes of the knit products stable becomes longer. For dealing with this issue, Patent Document 1 (WO2009/031468) proposes to divide a knit product into plural polygons, the virtual stable shape of the knit product is simulated based upon the forces acting on the polygons, then stitches are arranged within the polygons, and finally, the arrangement of the stitches is smoothed.

### Reference List

### Patent Document

Patent Document 1: WO2009/031468

### Summary of the Invention

### Problem to Be Solved

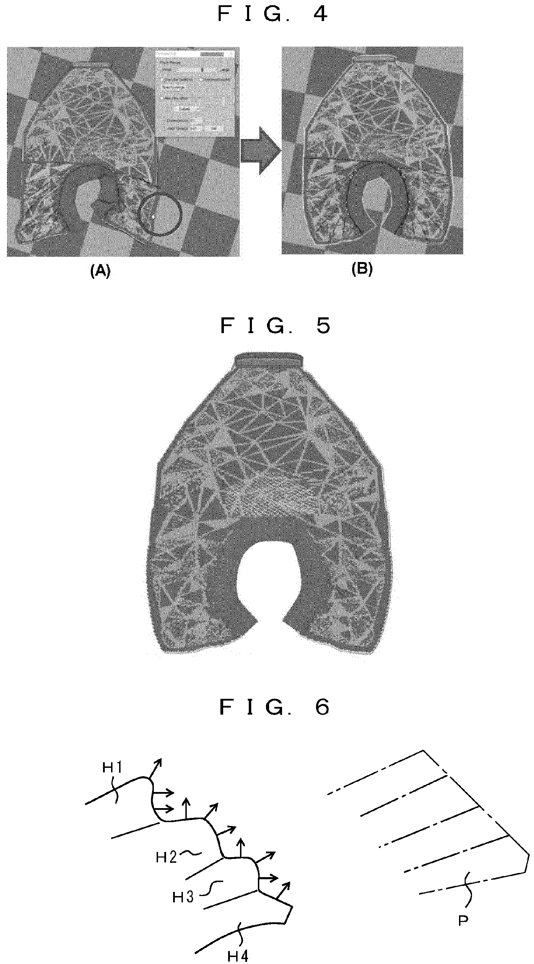

Some knit products are knitted by flechage knitting or with darts formation which requires narrowing and widening knitting. These knitted products have plural parts and they are divided with each other in the knit data. When the virtual stable shapes of these knit products having plural parts are simulated with the division into the plural parts, the parts sometimes deform remarkably, because the connection between the parts shall be kept, and the simulated knit products sometimes remain in unnatural shapes. Fig. 4 (A) indicates one example; the knit product is a shoe upper, the unpatterned portion at the center bottom is the top line part and it has wrinkles. The shoe upper should be nearly symmetrical on the left and right sides, but it has an asymmetrical shape in the simulation.

The object of the invention is to accurately simulate the shapes of knit products divided into plural parts in their knit data, to those near from the designed patterned shape (pattern data) or to natural shapes acceptable to users.

### Means for Solving the Problem

A knit simulation method according to the invention for simulating a virtual shape of knit product comprising plural parts mutually divided in knit data of the knit product, by a knit simulation system, carries out the following steps in the order:
a connection step for obtaining connection information regarding how said plural parts are mutually connected based upon said knit data or pattern data of said knit product, and connecting the plural parts mutually based upon the obtained connection information;
a pre-deformation step for deforming the virtual shape of the knit product by deforming the plural parts according to forces acting on the plural parts:
   a post-modification step for stretching at least one of the plural parts deformed in the pre-deformation step automatically or according to at least an instruction by a user, and then, deforming the virtual shape of the knit product to a natural shape by re-deforming the plural parts according to forces acting on the plural parts; and
   a smoothing step for allocating stitches within the plural parts, and smoothing the allocation of the stitches within the plural parts.

A knit simulation system according to the invention for simulating a virtual shape of knit product comprises plural parts mutually divided in knit data of the knit product comprising:
a connection means for obtaining connection information regarding how said plural parts are mutually connected based upon said knit data or pattern data of said knit product, and connecting the plural parts mutually based upon the obtained connection information;
a pre-deformation means for deforming the virtual shape of the knit product by deforming the plural parts according to forces acting on the plural parts:
   a post-modification means for stretching at least one of the plural parts deformed by the pre-deformation means automatically or according to at least an instruction by a user, and then, deforming the virtual shape of the knit product to a natural shape by re-deforming the plural parts according to forces acting on the plural parts; and
   a smoothing means for allocating stitches within the plural parts, and smoothing the allocation of the stitches within the plural parts.

According to the invention, at least a part is stretched after the pre-deformation, and as a result, the knit product is deformed to a shape to which the pre-deformation may not deform the knit product. The direction of the stretch is not limited to one towards the outside of the part; for example, the outer shape of the part may be kept nearly constant but the wrinkles in the part may be removed. Further, the parts comprise plural polygons respectively, and, after the post-deformation, stitches are allocated within the parts. By the pre-deformation before the stretch, the knit product is deformed within the range which is possible by the simulation based upon the forces acting on the parts. And then, by the stretch, the knit product is stretched. Due to the stretch, tension become to work on the parts, and the knit product is changed to a state from which the knit product can deform significantly. At the same time with this, the knit product may approach to a natural shape. In the next post-deformation step, the parts are deformed according to the forces acting on the parts. Since the parts become to deform from the stretched state, the knit product deforms substantially and remarkably and escapes from the unnatural shape to approach the natural shape. Then, the allocation of the stitches is smoothed so as to eliminate unnatural stitch allocation and, as a result, the virtual shape of the knit product is accurately simulated.

According to the invention, knit products having plural parts and difficult to simulate the shapes are accurately simulated in their shapes. The parts suitable for the present invention are, for example, those knitted by flechage and connected with each other on a knitting machine, the bodies and the sleeves of clothes, parts divided by darts. While the connected bodies and sleeves may seem simply simulated, if the connection information is complex, accurate simulation without the present invention is often difficult. In addition, the connection between the parts generally causes torsion in the parts (internal torsion within the parts) and this torsion makes the simulation difficult.

Preferably, in the pre-modification step and the post-modification step, the forces acting on the plural parts are determined in consideration with a rigidity parameter (a parameter indicating the resistivity in the deformation against external forces) dependent upon the plural parts. Each part may have a different rigidity from other parts and the rigidity of each part may be reflected in the simulation.

Preferably, the rigidity parameter is set automatically based upon the knit data or both the knit data and data regarding yarn used in the plural parts (the material and properties of the yarn, and so on), or according to at least an instruction by the user. Since the knit data specifies the knitted structure and the sizes of the stitches, the rigidity of the parts may be estimated from the knit data. When the knit product includes plural parts different in the rigidity with each other, the rigidity for respective parts may be speculated from the knit data and the data regarding the yarn. As a result, the rigidity parameters may be set automatically.

Preferably, the stretching is carried out, automatically without the instruction by the user, according to a pre-determined rule, by the knit simulation system. Thus, the participation of the user to the simulation is decreased.

Preferably, the knit product to be simulated has at least a part to be knitted by flechage. When a part is knitted by flechage, the part remarkably deforms when connected to the surrounding parts. Still in this case, accurate simulation is carried out according to the invention.

Preferably, in the smoothing step, the respective stitches are moved according to the forces acting on the respective stitches. By this step, respective stitches come near to the equilibrium state, and the forces acting on the respective stitches come near to the balance point; therefore, accurate simulation is carried out.

### Brief Description of the Drawings

Fig. 1 shows in (A) knit data for a shoe upper and in (B) a simulation result of the shoe upper after stretch according to the best embodiment.
Fig. 2 shows a simulation result of the shoe upper for the knit data in Fig. 1 (A) according to a conventional method.
Fig. 3 shows various data during simulation, where (A) shows the knit data for the shoe upper, (B) the connection between parts, and (C) the simulation result during pre-deformation step.
Fig. 4 shows in (A) the simulation result of the shoe upper after the pre-deformation step and in (B) the simulation result after the post-deformation step.
Fig. 5 shows the simulation result of the shoe upper by loop simulation after the post-deformation step.
Fig. 6 indicates schematically an example of the stretch of parts.
Fig. 7 indicates a block diagram of the knit simulation system according to the best embodiment.
Fig. 8 indicates a flow-chart of the knit simulation method according to the best embodiment.
Fig. 9 indicates a pattern data for another shoe upper comprising two parts.
Fig. 10 indicates a pattern data for a knit vest, where (A) indicates the pattern data for the front body and (B) the pattern data for the back body.
Fig. 11 indicates the knit data corresponding to the design in Fig. 10, where (A) indicates schematically the knitting method for the knit vest and (B) the connection between the front body and the back body.

### Features for Carrying out the Invention

The best and other embodiments for carrying out the invention will be described. Embodiment

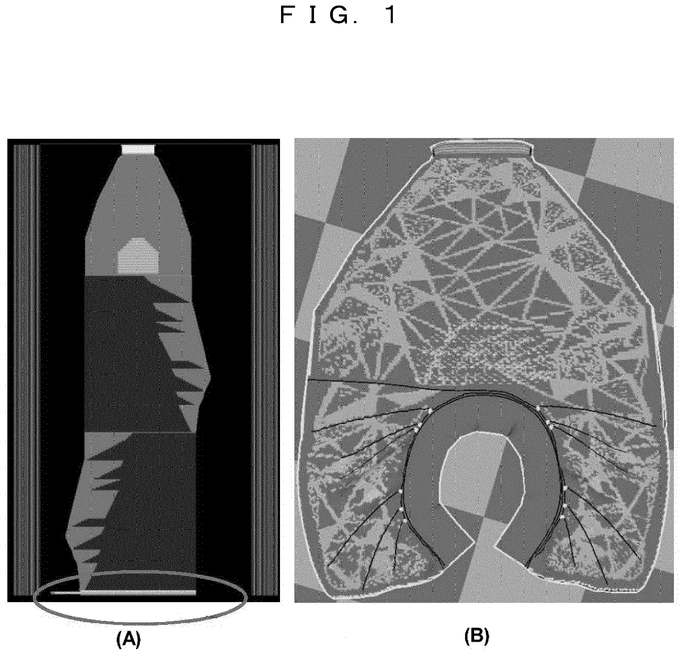

Figs. 1 - 11 indicate the embodiment, its modifications, and conventional examples. Fig. 1 (A) reveals the knit data for a knit product (shoe upper) to be simulated, and in the knit data (information regarding the knitting of the knitted fabric), the knit product is divided into plural parts. The white and gray portions in the drawing are the knitted fabric, and the black portions are not the knitted fabric. The encircled white horizontal band at the lower end in (A) is the top line part and it is expressed with compression. The plural gray portions in (A) are parts of the shoe upper; the parts other than the toe part and the instep part are knitted by flechage, and the plural parts are connected with each other. The heel portion of the shoe upper is divided to the left and right and is not connected with each other. The uppermost portion in (A) is the toe part and the pale gray part is one next to and above the top line part. The knitting is performed, for example, from the bottom side towards the top side of (A), and the uppermost white band is a portion to end the knitting.
the shoe upper may have different knitting structures depending upon the portions and the species of the yarns may be different depending upon the portions. Namely, the plural parts may have different rigidities. For example, the toe part of the shoe upper may have an interlock knitting structure, which is relatively hard and is not easily deformed. The top line part may have a tubular rib knitting structure, which is relatively soft and is easily deformed. Within one part, the rigidity may be different due to the variations in the knitting structure or the species of the yarns. Further, the parts generally have different rigidities between the course direction and the wale direction. Here, the course direction is a direction along which stitch rows are made with continuous yarns, and the wale direction is a direction along which the stitches are associated with each other. By the way, the knitting methods themselves for the shoe upper are not part of the invention, and the species of the knit products to be knitted are not the part of the invention. The knitting machine to be used in the knitting is for example a flat knitting machine but the species of the machine are arbitrary.

While not clear from Fig. 1 (A), the knit data specifies the shapes of the parts, the connection information between the parts regarding how the plural parts are mutually connected, and the knitting structure, namely, the allocation of the stitches and the species of the stitches. The basic design data of the knit data is the pattern data that specifies the knitted fabric shape of the shoe upper, and the knitted fabric is divided into the plural parts. The pattern data includes the similar data to the knit data, as long as relating to the simulation, except that the pattern data does not specify the knitted structure of the parts.

Fig. 1 (B) reveals the simulation result after the connection of the parts, the pre-deformation, and the stretch of stitches according to an example. The black lines indicate the boundaries between the parts, the O marks indicate the intersection points between the boundaries of the parts and the top line part. It shows a relatively natural image, while wrinkles remain at the top line part.

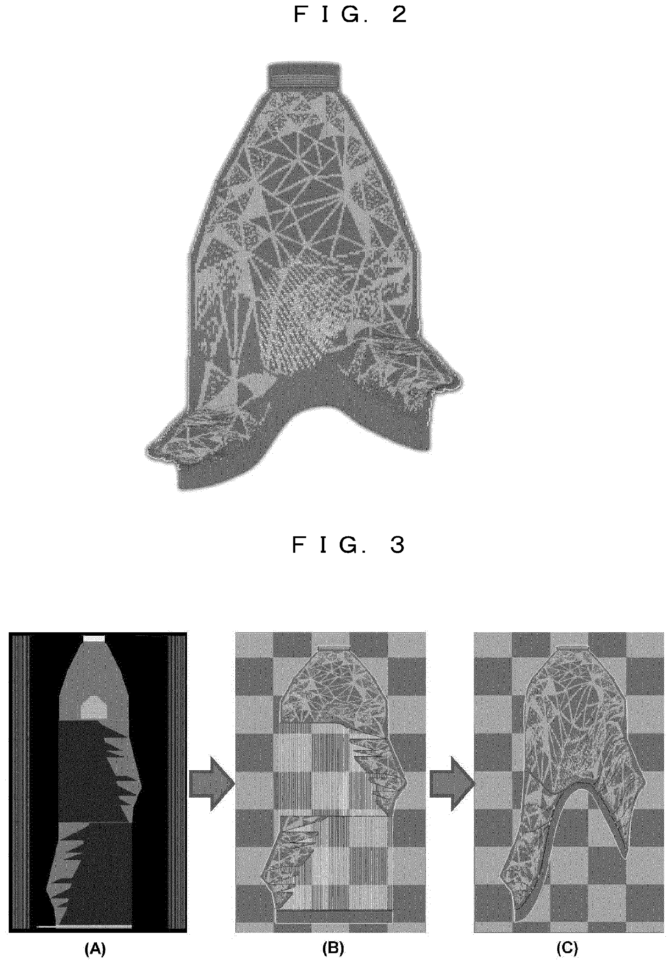

Fig. 2 reveals the simulation result according to a conventional method for the shoe upper in Fig. 1 (A); the forces acting on each stitch, namely the tension between the stitches and the frictional force due to the motion of stitches, are considered, and the unit in the simulation was the stitches. Since the simulation was stopped after a realistic simulation time has elapsed, the virtual shape of the knitted fabric was not stable and is not natural as a shoe upper.

Fig. 3 reveals various simulation results before and during the pre-deformation according to the embodiment. Fig. 3 (A) reveals the knit data for the shoe upper (the same to Fig. 1 (A)), (B) indicates schematically the connection information between the parts, and the connection information can be determined by the knit data and also by the pattern data. (C) reveals a simulation result during the pre-deformation, after connecting the parts, affording the rigidity parameters respectively to the parts, and simulating halfway in consideration with the forces acting between the parts. The forces acting on the parts were the elastic force against the deformation of the parts, which is determined by the degree of the deformation of the parts and the rigidity parameters, and the frictional force, which converges the motion of the parts, but the gravitational force acting on the parts may be considered in addition. Further, the mass of each part was determined such that it was proportional to the area of the part, but the species of the yarn, the density of the stitches within the part, and so on may be further considered. In Fig. 3 (C), the shoe upper has an unnatural virtual shape; at the right side of the top line part, parts are compressed, there are present many wrinkles, and unevenness is present within parts, while it is inconspicuous in the drawing.

Fig. 4 (A) reveals the simulation result after the pre-deformation, and Fig. 4 (B) a simulation result after stretching the parts resultant in Fig. 4 (A) and after the post-deformation. In (A), the top line part has wrinkles, the left side and the right side of the top line part are asymmetrical, and at the portion surrounded by a circle, the edge of the knitted fabric is not straight but is wavy.

The stretch may be performed automatically or according to manual input, it may be started from, for example, the toe part and is performed in the order to the top line part or the like so that the parts are stretched individually. In the stretch, the points on the contours of the parts are moved and other points follow the contour points. All the parts may be stretched or only the parts having unnatural virtual shapes may be stretched.

In the stretch of the parts, a rule that part shapes in the knit data and the pattern data have to be near from the natural shapes of the parts may be used. According to this rule, the parts are respectively stretched towards the part shapes in the knit data or the pattern data. Wrinkles (unevenness) present in parts are not natural, and therefore, a rule that parts are stretched so that the wrinkles are removed. In the stretch, a rule that parts are radially stretched respectively from center points near from the centers of the parts may be used.

Fig. 6 indicates a rule that parts are stretched so as to eliminate the wrinkles on the contours of the parts. The right side of the drawing indicates the pattern data P, and the left side indicates the corresponding parts after the pre-deformation. The knit product comprises four parts HI to H4; the contours of the parts have waves and this indicates the parts HI to H4 are compressed when they are connected. The normal lines to the contours are shown by vectors of arrows; the sum of the absolute values of differences of the vector orientations indicates the degree that the contours are wavy. Therefore, the contours are stretched so that the above sum becomes smaller, in other words, the contours of the parts become smooth.

The stretch of parts may be performed automatically according to the above rules and so on or manually according to the instructions by a user how to stretch the parts.

Fig. 5 reveals the simulation result, resultant by allocating stitches respectively within the parts, simulating the stitch positions in consideration with the forces acting on the stitches, and then mapping loop shapes to the respective stitch positions, after the post-deformation. It has a natural shape as a shoe upper; unnatural points such as wrinkles are small, and respective stitches are represented accurately. By the way, the simulation according to the forces acting on the stitches may be omitted and the positions of the stitches may be smoothed in place of the simulation.

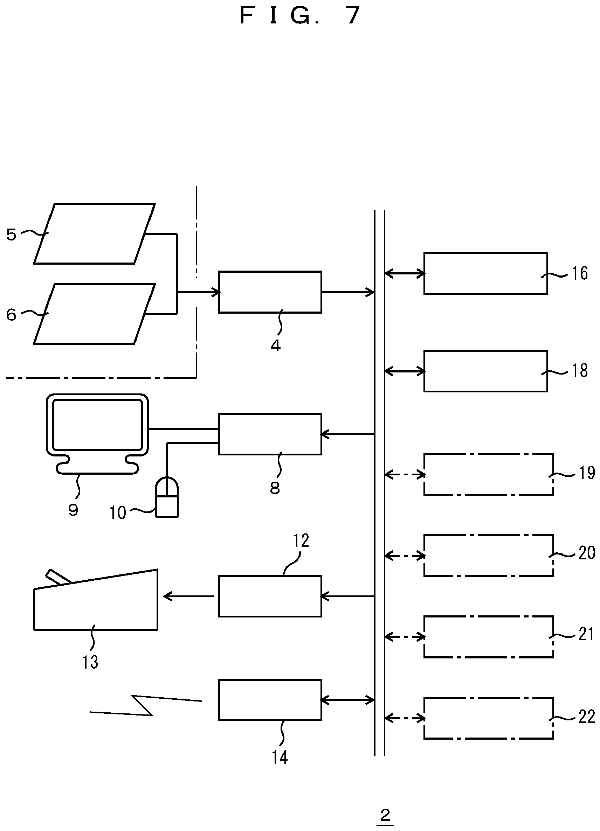

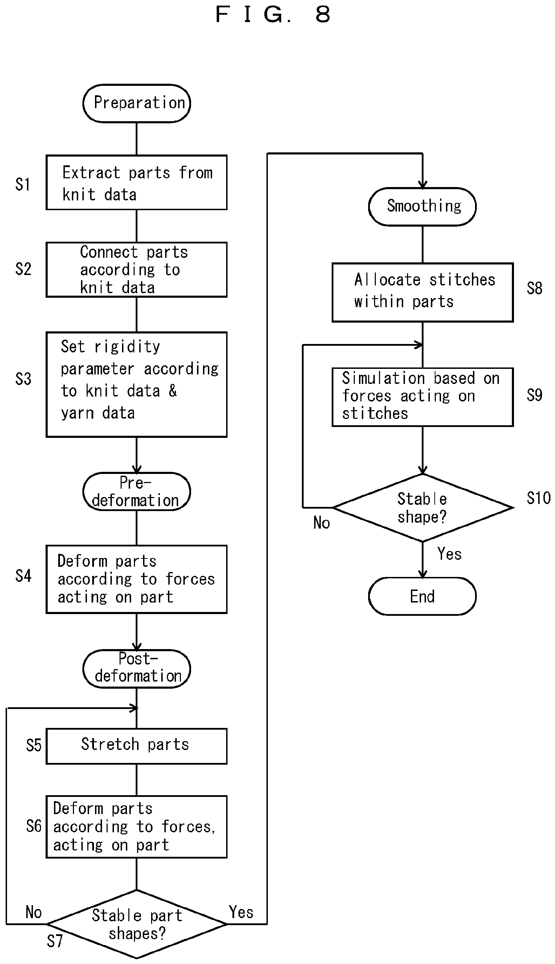

Fig. 7 indicates the knit simulation system according to the embodiment. Indicated by 4 is an input interface, which receives knit data files 5 and yarn data files 6. Indicated by 8 is a human interface which is connected to a display 9 and a pointing device 10 and receives instructions such as how to stretch the parts. Indicated by 12 is a printer interface, 13 the printer. Indicated by 14 is a communication interface, which receives data such as knit data, pattern data, yarn rigidity data, and so on, and outputs the simulation results. Indicated by 16 is a processor, and 18 a memory. The knit simulation system 2 works according to the algorithm shown in Fig. 8 and is, effectively and virtually, as the functions of the system, provided with a connection means 19, a pre-deformation means 20, a post-deformation means 21, and a smoothing means 22.

Fig. 8 indicates the simulation algorithm according to the embodiment, and the details of the algorithm have been already shown in Figs. 3 to 5. At the preparation steps, parts in a knitted fabric are extracted from the corresponding knit data or the pattern data (Step S1), and in Step S2, the extracted parts are mutually connected according to the knit data or the pattern data. In Step S3, the rigidity parameters for the parts are, preferably automatically, set according to both the knit data and the pattern data, or according to only knit data.

In the pre-deformation step (Step S4), the virtual shapes of the parts are respectively deformed according to forces acting on the parts. In the post-deformation steps (Steps S5 to S7), the parts are stretched in Step S5. In Step S6, the virtual shapes of the parts are respectively deformed according to the forces acting on the parts. Until the virtual shapes of the parts become stable, in other words, until the virtual shape of the knit product becomes stable, Steps S5 to S7 are repeated. In the smoothing steps (Steps S8 to S10), stitches are allocated within the corresponding parts (Step S8), the simulation according to the forces acting on the stitches is carried out (Step S9), and, when the virtual shape of the knit product becomes stable, the simulation is finished (Step S10).

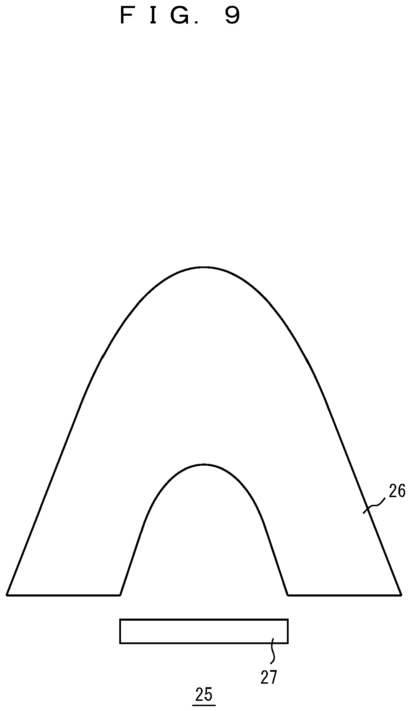

Fig. 9 shows a pattern data 25 for a shoe upper comprising two parts of the main part 26 and the top line part 27. The present invention is applicable to the simulation for these simple shoe uppers.

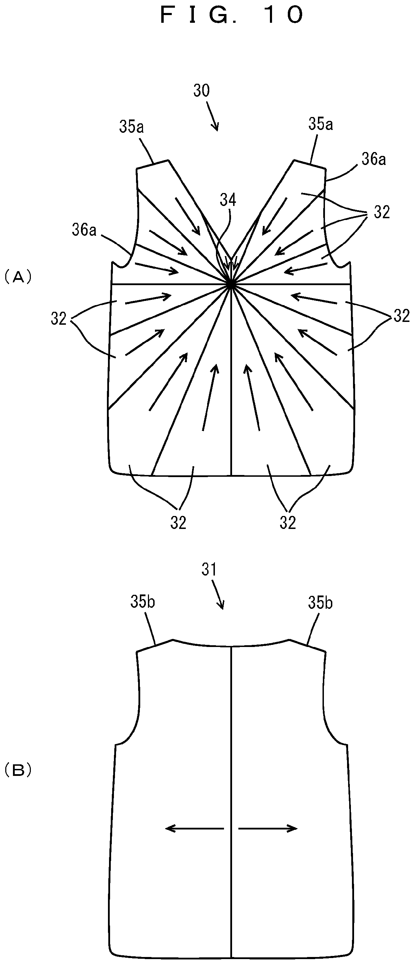

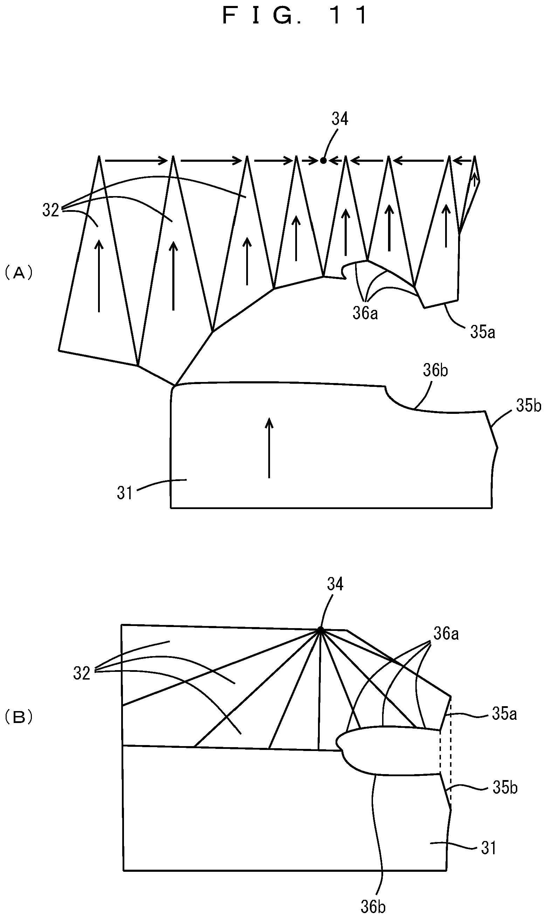

The objects to be simulated according to the invention are not limited to shoe uppers. For example, shoe uppers and socks are in common at that flechage knitting is often used for the production. Figs. 10 and 11 indicate an example where the present invention is applied to a knit vest. Fig. 10 (A) shows the pattern data for the front body 30 and (B) the pattern data for the back body 31. The arrows in Fig. 10 indicate the directions in which the knitting is carried out. The plural parts 32 in the front body 30 converge into a point 34 at their tips. The front body 30 and the back body 31 are respectively provided with shoulder lines 35a, 35b and arm hole lines 36a, 36b. Fig. 11 (A) indicates the knit data schematically; the plural parts 32 are knitted in the directions of the arrows towards the converging point 34 at their tips. The parts 32 are separated by darts with each other and they are mutually connected on the knitting machine during the knitting. Fig. 11 (B) indicates the joining between the front body and the back body; they are mutually joined at their shoulder lines 35a, 36b.

The present invention may be applied to the simulation of these vests. In this example, the pre-deformation is performed from the state shown in Fig. 11 (A) so that the plural parts are mutually connected and the front and back bodies are connected at the shoulder lines 35a, 36b. Then, the front body 30 and the back body 31 are laid to a state nearly horizontal so that they overlap and abut with each other. After that, the post-deformation and the stretch are performed.

### List of Symbols

- 2: knit simulation system
- 4: input interface
- 5: knit data file
- 6: yarn data file
- 8: human interface
- 9: display
- 10: pointing device
- 12: printer interface
- 13: printer
- 14: communication interface
- 16: processor
- 18: memory
- 19: connection means
- 20: pre-deformation means
- 21: post-deformation means
- 22: smoothing means
- 25: pattern data for a shoe upper
- 26: main part
- 27: top line part
- 30: front body
- 31: back body
- 32: parts
- 34: converging point
- 35a, 35b: shoulder line
- 36a, 36b: arm-hole line
- P: pattern data
- H1-H4: parts

## Claims

1. A knit simulation method for simulating a virtual shape of knit product comprising plural parts (H1-H4,26,27,32) mutually divided in knit data of the knit product, by a knit simulation system (2), **characterized by** carrying out the following steps in the order:
a connection step (S2) for obtaining connection information regarding how said plural parts (H1-H4,26,27,32) are mutually connected based upon said knit data or pattern data (25,30,31,P) of said knit product, and connecting the plural parts (H1-H4,26,27,32) mutually based upon the obtained connection information;
a pre-deformation step (S4) for deforming the virtual shape of the knit product by deforming the plural parts (H1-H4,26,27,32) according to forces acting on the plural parts:
a post-modification step (S5-S7) for stretching at least one of the plural parts (H1-H4,26,27,32) deformed in the pre-deformation step automatically or according to at least an instruction by a user, and then, deforming the virtual shape of the knit product to a natural shape by re-deforming the plural parts (H1-H4,26,27,32) according to forces acting on the plural parts; and
a smoothing step (S8-S10) for allocating stitches within the plural parts (H1-H4,26,27,32), and smoothing the allocation of the stitches within the plural parts (H1-H4,26,27,32) .

2. The knit simulation method according to claim 1, wherein, in the pre-modification step (S4) and the post-modification step (S5-S7), the forces acting on the plural parts are determined in consideration with a rigidity parameter dependent upon the plural parts.

3. The knit simulation method according to claim 2, wherein said rigidity parameter is set automatically based upon the knit data or both the knit data and data regarding yarn used in the plural parts, or according to at least an instruction by the user.

4. The knit simulation method according to one of claims 1 to 3, wherein said stretching is carried out, automatically without the instruction by the user, according to a pre-determined rule, by the knit simulation system (2).

5. The knit simulation method according to one of claims 1 to 5, wherein at least one of the plural parts is to be knitted by flechage.

6. The knit simulation method according to one of claims 1 to 5, wherein, in said smoothing step (S8-S10), the respective stitches are moved according to forces acting on the respective stitches.

7. A knit simulation system for simulating a virtual shape of knit product comprising plural parts (H1-H4,26,27,32) mutually divided in knit data of the knit product **characterized by**:
a connection means (19) for obtaining connection information regarding how said plural parts (H1-H4,26,27,32) are mutually connected based upon said knit data or pattern data (25,30,31,P) of said knit product, and connecting the plural parts (H1-H4,26,27,32) mutually based upon the obtained connection information;
a pre-deformation means (20) for deforming the virtual shape of the knit product by deforming the plural parts (H1-H4,26,27,32) according to forces acting on the plural parts:
a post-modification means (21) for stretching at least one of the plural parts (H1-H4,26,27,32) deformed by the pre-deformation means (20) automatically or according to at least an instruction by a user, and then, deforming the virtual shape of the knit product to a natural shape by re-deforming the plural parts (H1-H4,26,27,32) according to forces acting on the plural parts (H1-H4,26,27,32); and
a smoothing means (22) for allocating stitches within the plural parts (H1-H4,26,27,32), and smoothing the allocation of the stitches within the plural parts (H1-H4,26,27,32) .
